# EUROPEAN PATENT APPLICATION

(11) **EP 2 518 594 A1**
(43) Date of publication of application: **31.10.2012**
(21) Application number: 10845057.8
(22) Date of filing: 15.04.2010
(51) Int. Cl.: G06F 3/041

(54) **TOUCH SCREEN CALIBRATION PARAMETER OBTAINING METHOD AND DEVICE**

(30) Priority: 02.02.2010 CN 201010111362
(71) Applicant: ZTE Corporation, Shenzhen, Guangdong 518057 (CN)
(72) Inventor: LU, Kai, Shenzhen Guangdong 518057 (CN); XIE, Jun, Shenzhen Guangdong 518057 (CN)
(74) Representative: Price, Nigel John King
(86) International application number: PCT/CN2010/071802
(87) International publication number: WO 2011/094972

(57) **Abstract**

The invention discloses a method for obtaining calibration parameters of a touch screen comprising displaying at least two preset calibration reference points on a LCD; obtaining physical coordinates of sampling points obtained by clicking on positions corresponding to the calibration reference points on the touch screen and displaying the sampling points according to the physical coordinates and the calibration parameters; and if it is determined that the displayed sampling points are not coincident with their corresponding calibration reference points, adjusting distances between the sampling points and their corresponding calibration reference points, determining a minimal deviation between the adjusted sampling points and their corresponding calibration reference points and applying the minimal deviation to update the calibration parameters. The invention also provides an apparatus for obtaining calibration parameters of a touch screen. The invention improves use experience of users when performing calibration and assists the users in obtaining more accurate calibration parameters.

## Description

### Technical Field

The present invention relates to the field of electronic information technologies, and in particular, to a method and apparatus for obtaining calibration parameters of a touch screen.

### Background of the Related Art

Most of terminal interaction devices in existing technologies are equipped with touch screens to provide users with convenient and rapid input modes. In accordance with the working principle of the touch screens and medium for information transmission, the touch screens can be divided into four types, resistive touch screens, infrared touch screens and capacitance-inductive touch screens and surface acoustic wave touch screens.

Now, the most widely used touch screen is still the resistive touch screen, the surface of which is indium oxide (OTI) comprised of two layers of transparent materials coated with conductive medium. When the touch screen is under pressure, the two layers of transparent materials are on, and the touch screen controls a chip to obtain potentials at pressure points by scanning XY axes on the touch screen, then obtain so-called physical coordinates after A/D conversion, and then transform the A/D-converted potential values on the touch screen into coordinate points, i.e., so-called logical coordinates on a the Liquid Crystal Display (LCD) based on proportion relationships between the potentials on the X/Y axis at touch points and XY axes of point coordinates of the LCD in corresponding positions. In normal cases, the resistances between the touch points will be different, even on the same touch screen, and with the increase in using time, the resistance of the touch screen itself will change. In order not to affect the accuracy and sensitivity of use of the touch screen, calibration parameters must be modified accordingly as well.

A currently used calibration method is that a few points are first displayed on the LCD, and then a user clicks on these points on the touch screen, and a program calculates new calibration parameters based on the points displayed on the LCD and the points on which the user clicks. In CN patent application No. CN101354621A filed on January 28, 2009 and titled "calibration parameters of a touch screen determining method and apparatus thereof", a determining mechanism is added in a program, a range is assigned to a point on which the user clicks. If both the coordinate point and a point displayed on the LCD are within this range, the point will be considered to be valid. The method process is an improvement on the traditional method, but it substantially operates on different individual points many times to complete calibration.

### Summary of the Invention

Embodiments of the present invention provide a method and apparatus for obtaining calibration parameters of a touch screen to provide a method for calibrating a touch screen based on user inputs, so as to improve accuracy of the calibration parameters.

An embodiment of the present invention provides a method for obtaining calibration parameters of a touch screen comprising:
displaying at least two preset calibration reference points on a (liquid crystal display) LCD;
obtaining physical coordinates of sampling points obtained by clicking on positions corresponding to the calibration reference points on the touch screen, and displaying the sampling points according to the physical coordinates and the calibration parameters; and
if it is determined that the displayed sampling points are not coincident with their corresponding calibration reference points, adjusting distances between the sampling points and their corresponding calibration reference points, determining a minimal deviation between the adjusted sampling points and their corresponding calibration reference points, and applying the minimal deviation to update the calibration parameters.

When there is a plurality of calibration reference points, determining the minimal deviation between the adjusted sampling points and their corresponding calibration reference points comprises:
obtaining a distance between each calibration reference point and its corresponding sampling point, and determining a minimum of sum of the distances between the calibration reference points and their corresponding sampling points as the minimal deviation between the sampling points and the calibration reference points.

When there are two calibration reference points, determining the minimal deviation between the adjusted sampling points and their corresponding calibration reference points comprises:
determining that the two calibration reference points and two sampling points are on the same line; and
obtaining a first distance between a first calibration reference point and its corresponding first sampling point and a second distance between a second calibration reference point and its corresponding second sampling point, and using a minimum of sum of the first distance and the second distance as the minimal deviation.

According to the above method, an embodiment of the present invention further provides an apparatus for obtaining calibration parameters of a touch screen comprising:
a sampling point displaying module configured to display at least two preset calibration reference points on a (liquid crystal display) LCD, obtain physical coordinates of sampling points obtained by clicking on positions corresponding to the calibration reference points on the touch screen, and display the sampling points according to the physical coordinates and the calibration parameters; and
an calibration parameter determining module configured to, if it is determined that the displayed sampling points are not coincident with their corresponding calibration reference points, adjust distances between the sampling points and their corresponding calibration reference points, determine a minimal deviation between the adjusted sampling points and their corresponding calibration reference points, and apply the minimal deviation to update the calibration parameters.

When there two calibration reference points, the calibration parameter determining module determining the minimal deviation between the adjusted sampling points and their corresponding calibration reference points specifically comprises:
determining that the two calibration reference points and two sampling points are on the same line; and
obtaining a first distance between a first calibration reference point and its corresponding first sampling point and a second distance between a second calibration reference point and its corresponding second sampling point, and using a minimum of sum of the first distance and the second distance as the minimal deviation.

When there is a plurality of calibration reference points, the calibration parameter determining module determining the minimal deviation between the adjusted sampling points and their corresponding calibration reference points specifically comprises:
obtaining a distance between each calibration reference point and its corresponding sampling point, and determining a minimum of sum of the distances between the calibration reference points and their corresponding sampling points as the minimal deviation between the sampling points and the calibration reference points.

Using the method and apparatus in accordance with the embodiments of the present invention, different individual points are not required to be operated many times for calibration, and a group of points can be operated once directly to complete calibration. Use experience of the user when performing calibration is improved to assist the user in obtaining more accurate calibration parameters.

### Brief Description of Drawings

FIG. 1 is a flowchart of a method for obtaining calibration parameters of a touch screen according to an embodiment of the present invention;
FIG. 2 is a simulation diagram in the case of two calibration reference points according to an embodiment of the present invention;
FIG. 3 is a simulation diagram in the case of two calibration reference points and after sampling points are modified according to an embodiment of the present invention;
FIG. 4 is a simulation diagram in the case of three calibration reference points according to an embodiment of the present invention;
FIG. 5 is a simulation diagram in the case of no calibration deviation according to an embodiment of the present invention;
FIG. 6 is a simulation diagram in the case of three calibration reference points and after sampling points are modified according to an embodiment of the present invention; and
FIG. 7 is a block diagram of an apparatus for obtaining calibration parameters of a touch screen according to an embodiment of the present invention.

### Preferred Embodiments of the Present Invention

A method for obtaining calibration parameters of a touch screen according to an embodiment of the present invention comprises: displaying at least two preset calibration reference points on a (liquid crystal display) LCD; obtaining physical coordinates of sampling points obtained by clicking on positions corresponding to the calibration reference points on the touch screen, and displaying the sampling points according to the physical coordinates and the calibration parameters; and if it is determined that the displayed sampling points are not coincident with their corresponding calibration reference points, adjusting distances between the sampling points and their corresponding calibration reference points, determining a minimal deviation between the adjusted sampling points and their corresponding calibration reference points, and applying the minimal deviation to update the calibration parameters.

Specific embodiments of the present invention will be described in detail in conjunction with the accompanying drawings of the description hereinafter.

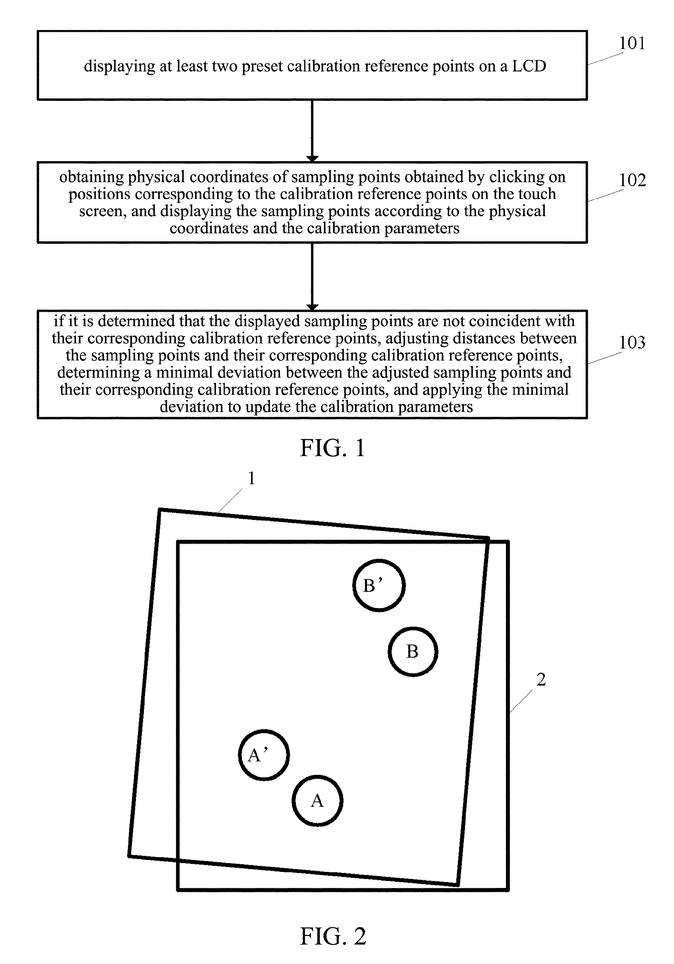

As shown in FIG. 1, a method for obtaining calibration parameters of a touch screen according to an embodiment of the present invention is illustrated, which comprises the following specific implementation steps.

In step 101, at least two preset calibration reference points are displayed on a LCD.

The calibration reference points are a group of points with fixed coordinates, and when a user calibrates the touch screen, the group of calibration reference points, which is denoted as group A, is displayed on the LCD.

In step 102, physical coordinates of sampling points obtained by clicking on positions corresponding to the calibration reference points on the touch screen are obtained, and the sampling points are displayed according to the physical coordinates and the calibration parameters.

The calibration parameters are proportion relationships of relative positions between the LCD and the touch screen, i.e., the proportion relationships between the logical coordinates displayed on the LCD and the physical coordinates of the clicked positions of the touch screen.

When the user clicks on the corresponding positions of the calibration reference points on the touch screen, physical coordinates obtained by clicking on positions corresponding to the calibration reference points on the touch screen are obtained, and the proportion relationships between the physical coordinates and the corresponding position coordinates of the LCD are determined according to the calibration parameters, the physical coordinate values are transformed into logical coordinates on the LCD, and the sampling points are displayed according to the logical coordinates, wherein the group of sampling points is denoted as group B.

In step 103, if the displayed sampling points are not coincident with their corresponding calibration reference points, the distances between the sampling points and their corresponding calibration reference points are adjusted, and a minimal deviation between the adjusted sampling points and their corresponding calibration reference points is determined, and the minimal deviation is used to update the calibration parameters.

There are many methods to determine whether the sampling points are coincident with the calibration reference points. In the embodiment of the present invention, whether the sampling points are coincident with the calibration reference points can be determined by determining whether the logical coordinates of the sampling points are the same as the logical coordinates of the calibration reference points. If the logical coordinates of the sampling points are not the same as the logical coordinates of the calibration reference points, the sampling points are not coincident with the calibration reference points.

The relative positions between points in group B and points in group A can be minimized by means of translating XY axes up, down, left and right, or rotating one of the points in group B.

Adjustment of the points in group B can be implemented by using a touch screen, pressing buttons or directly inputting adjustment parameters, but the embodiments of the present invention are not limited thereto, and any mode able to implement the adjustment of the points in group B can be applied to the embodiments of the present invention.

In the embodiments of the present invention, the user can adjust the points in group B many times until the distances between the points in group B and the points in group A are minimal. When the user adjusts the points in group B, new parameters are computed based on data input on the display and then compared with the stored parameters, and optimal parameters are selected as calibration parameters input by the user the next time.

In the embodiments of the present invention, there is a plurality of calibration reference points, each calibration reference point corresponding to a sampling point. As shown in FIG. 2, if there are two calibration reference points, the specific implementation mode will be described below.

Block 2 in the figure is an area of a LCD, and an area enclosed by block 1 is an area of a touch screen, and both A, B and A' and B' are points displayed on the LCD. When a calibration program is invoked, the following steps will be performed.

Two absolute coordinate points, i.e., calibration reference points, such as A and B points shown in the figure, will be displayed on the LCD. A' and B' are the user clicked points on the touch screen displayed according to the proportion relationships between the LCD and the touch screen after the user clicks on the corresponding positions of points A and B on the touch screen according to his own click habit and visual effects. If the LCD is totally coincident with the touch screen and resistances of the touch screen are evenly distributed, and in the case that the calibration parameters are extremely accurate, A and A' as well as B and B' should be totally coincident.

If the LCD and the touch screen are not coincident, the distances between A' and B' and between A and B are adjusted by moving both points A', B' through an external operation.

During adjustment of the distances between the points in the two groups, A' and B' are moved according to the input data, new parameters are computed based on the moved A' and B', whether the new parameters are optimal is determined, and the optimal parameters are selected to update the stored calibration parameters.

There are many methods to determine whether the new parameters are optimal, which will be described by taking "variance method" as example in this embodiment, but the present invention is not limited thereto. The specific implementation will be described hereinafter.

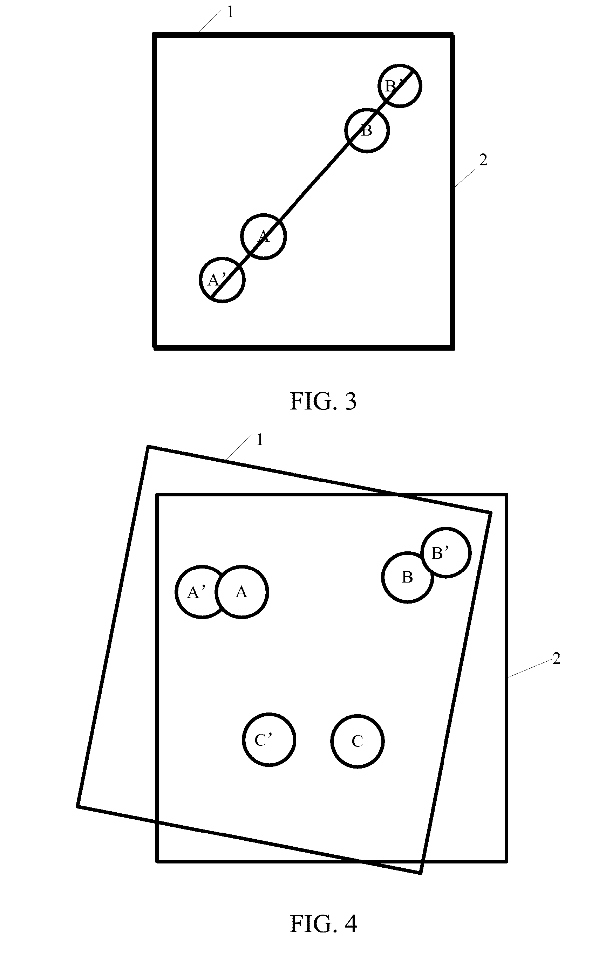

If the coordinates corresponding to points A', B' and A, B are (A'x, A'y), (B'x, B'y), (Ax, Ay) and (Bx, By) respectively,
firstly, whether points in the two groups are on the same line, i.e., whether (Ax-Bx/Ay-By) is equal to (A'x-B'x/A'y-B'y) is determined, and if they are not on the same line, the four points are adjusted onto the same line, i.e., the sampling points A', B' are adjusted onto lines which are determined by the calibration reference points A, B respectively, the adjusted points are shown in FIG. 3.

If (Ax-Bx)/(Ay-By)= (A'x-B'x)/(A'y-B'y), distances between points in the two groups, i.e., the first distance |A' A| between point A and point A' and the second distance |B' B| between point B and point B', are computed.

A minimum of sum of the first distance and the second distance (i.e., a minimum deviation between the calibration reference points and the sampling points) is obtained and used as a calibration parameter. D=|A' A|+|B' B|, and in the embodiments of the present invention, the smaller D=|A' A|+|B' B| is, the smaller the error between the two groups is, and the more accurate the computed calibration parameter is.

When there are a plurality of calibration reference points, adjusting the sampling points and determining the minimum deviation between the sampling points and the calibration reference points comprises determining a distance between each sampling point and its corresponding calibration reference point, obtaining a minimum of sum of the distances between all calibration reference points and their corresponding sampling points, and using the minimum as a minimal deviation between the sampling points and the calibration reference points. The specific implementation will be described below.

As shown in FIG. 4, 5 and 6, block 2 represents a display area of a LCD, an area of block 1 is an area of a touch screen. Points A, B and C are points fixedly displayed on the LCD, points A', B' and C' are sampling points displayed on the LCD when a user clicks on positions corresponding to points A, B, C on the touch screen according to the proportion relationships between the LCD and the touch screen. The purpose of the user is to move points A', B' and C' entirely such that points A', B' and C' can be coincident with points A, B and C as much as possible. When the user adjusts the relative relationship between the points in the two groups, the new parameters representing the deviation between the points in the two groups are computed based on the user input, and the optimal parameters are selected as the calibration parameters input by the user the next time.

There are many methods to determine whether the new parameters are optimal. Here, taking "the minimum distance method" as example, i.e., if it is determined that the difference of distances between corresponding points in the two groups is minimal, the obtained calibration parameter is optimal, but the present invention is not limited thereto.

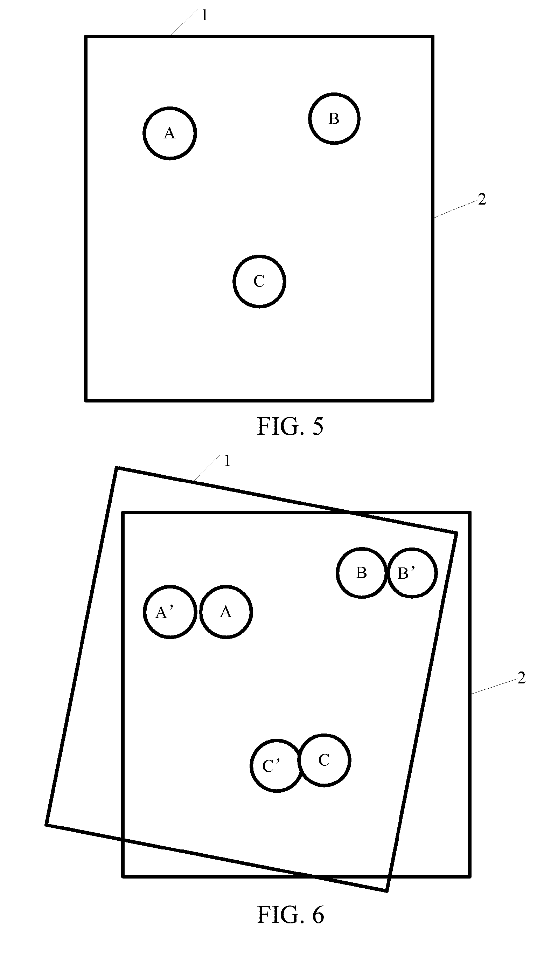

Assume that the difference of distances between the points in the two groups is D, and if the points in the two groups are totally coincident, as shown in FIG. 4, D should be 0, and if the points in the two groups are not totally coincident, as shown in FIG. 5, the calibration parameters should be selected according to a point when D is closest to 0.

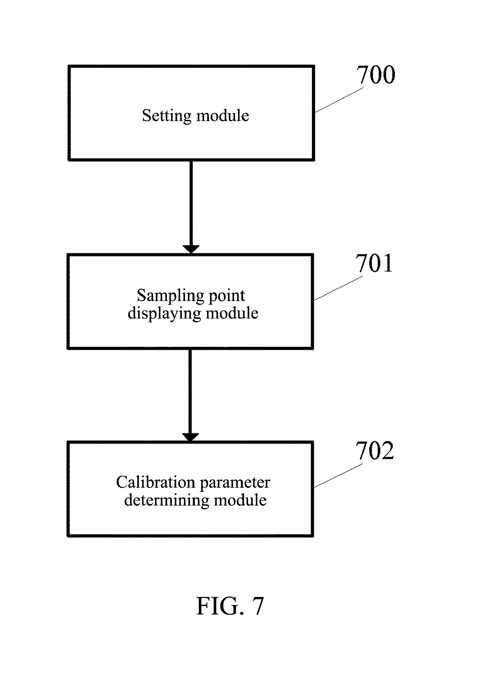

As shown in FIG. 7, an embodiment of the present invention further provides an apparatus for obtaining calibration parameters of a touch screen comprising a setting module 700, a sampling point displaying module 701, and a calibration parameter determining module 702.

The setting module 700 is configured to preset at least two calibration reference points on a LCD.

The sampling point displaying module 701 is configured to display the at least two calibration preset reference points on the LCD, obtain physical coordinates of sampling points obtained by clicking on positions corresponding to the calibration reference points on the touch screen, and display the sampling points according to the physical coordinates and the calibration parameters, where the calibration parameters are proportion relationships of the relative positions between the LCD and the touch screen.

The calibration parameter determining module 702 is configured to adjust distances between the sampling points and their corresponding calibration reference points if it is determined that the displayed sampling points are not coincident with their corresponding calibration reference points, determine a minimal deviation between the adjusted sampling points and their corresponding calibration reference points, and apply the minimal deviation to update the calibration parameters.

There may be two or more calibration reference points in the embodiments of the present invention, and according to the number of the calibration reference points, the specific application of the calibration parameter determining module 702 will be described below.

When there are two calibration reference points, the calibration parameter determining module 702 determining a minimal deviation between the adjusted sampling points and their corresponding calibration reference points specifically means that the calibration parameter determining module 702:
determine that the calibration reference points and the sampling points are on the same line; and
obtain a first distance between a first calibration reference point and its corresponding first sampling point and a second distance between a second calibration reference point and its corresponding second sampling point, and use a minimum of sum of the first distance and the second distance as a minimal deviation.

When there is a plurality of calibration reference points, the calibration parameter determining module 702 determining a minimal deviation between the adjusted sampling points and the corresponding calibration reference points means that the calibration parameter determining module 702:
obtain a distance between each calibration reference point and its corresponding sampling point, and determining a minimum of sum of the distances between the calibration reference points and their corresponding sampling points as a minimal deviation between the sampling points and the calibration reference points.

In the traditional calibration method, calibration is implemented by clicking on different points on the touch screen many times, while in the method in accordance with the embodiment of the present invention, calibration is completed by performing an operation on points in one group composed of at least two (including two) points once.

Compared with the traditional calibration method, the present method can reduce error and improve accuracy of the calibration. In addition, the method in accordance with the embodiment of the present invention further considers errors formed due to personal habits when a user uses the touch screen, and embodies such habit errors in new calibration parameters, which is suitable for the user's use habit and thus more user-friendly.

The method described in the present invention is not limited to the examples described in the specific embodiments, and other embodiments obtained by those skilled in the art according to the technical scheme of the present invention also belong to the scope of technological innovation of the present invention. Obviously, various modifications and variations to the present invention may be made by those skilled in the art without departing from the spirit and scope of the present invention. Thus, if these modifications and variations of the present invention belong to the scope of the claims and their equivalent technologies, the present invention is intended to cover these modifications and variations.

## Claims

1. A method for obtaining calibration parameters of a touch screen, wherein at least two calibration reference points and their corresponding calibration parameters are preset on a Liquid Crystal Display (LCD), and the method comprises:
displaying at least two preset calibration reference points on a (liquid crystal display) LCD;
obtaining physical coordinates of sampling points obtained by clicking on positions corresponding to the calibration reference points on the touch screen, and displaying the sampling points according to the physical coordinates and the calibration parameters; and
if it is determined that the displayed sampling points are not coincident with their corresponding calibration reference points, adjusting distances between the sampling points and their corresponding calibration reference points, determining a minimal deviation between the adjusted sampling points and their corresponding calibration reference points, and applying the minimal deviation to update the calibration parameters.

2. The method according to claim 1, wherein each calibration reference point corresponds to a sampling point.

3. The method according to claim 1, further comprising adjusting the distances between the sampling points and their corresponding calibration reference points by a touch screen or by pressing buttons.

4. The method according to claim 1, wherein when there are more than two clicked calibration reference points, determining the minimal deviation between the adjusted sampling points and their corresponding calibration reference points comprises:
obtaining a distance between each calibration reference point and its corresponding sampling point, and determining a minimum of sum of the distances between the calibration reference points and their corresponding sampling points as the minimal deviation between the sampling points and the calibration reference points.

5. The method according to claim 1, wherein when there are two clicked calibration reference points, determining the minimal deviation between the adjusted sampling points and their corresponding calibration reference points comprises:
when determining that the two calibration reference points and two sampling points are on the same line, obtaining a first distance between a first calibration reference point and its corresponding first sampling point and a second distance between a second calibration reference point and its corresponding second sampling point, and using a minimum of sum of the first distance and the second distance as the minimal deviation.

6. The method according to claim 1, wherein displaying the sampling points according to the physical coordinates and the calibration parameters comprises:
transforming the physical coordinate into logical coordinates on the LCD according to proportionate relationships between the physical coordinates and corresponding position coordinates on the LCD, and displaying the sampling points according to the logical coordinates.

7. The method according to claim 6, wherein the displayed sampling points are not coincident with the corresponding calibration reference points means that:
the logical coordinates of the sampling points on the LCD are compared with the logical coordinates of the corresponding calibration reference points, and the displayed sampling points are determined to be not coincident with the corresponding calibration reference points when the logical coordinates of the sampling points on the LCD and the logical coordinates of the corresponding calibration reference points are different.

8. An apparatus for obtaining calibration parameters of a touch screen comprising:
a sampling point displaying module configured to display at least two preset calibration reference points on a (liquid crystal display) LCD, obtain physical coordinates of sampling points obtained by clicking on positions corresponding to the calibration reference points on the touch screen, and display the sampling points according to the physical coordinates and the calibration parameters; and
an calibration parameter determining module configured to, if it is determined that the displayed sampling points are not coincident with their corresponding calibration reference points, adjust distances between the sampling points and their corresponding calibration reference points, determine a minimal deviation between the adjusted sampling points and their corresponding calibration reference points, and apply the minimal deviation to update the calibration parameters.

9. The apparatus according to claim 8, wherein the calibration parameter determining module is further configured to obtain a first distance between a first calibration reference point and its corresponding first sampling point and a second distance between a second calibration reference point and its corresponding second sampling point when there are two clicked calibration reference points and it is determined that the calibration reference points and the sampling points are on the same line.

10. The apparatus according to claim 8, wherein the calibration parameter determining module is further configured to obtain a distance between each calibration reference point and its corresponding sampling point when there a plurality of clicked calibration reference points, and determine a minimum of sum of the distances between the calibration reference points and their corresponding sampling points as the minimal deviation between the sampling points and the calibration reference points.
